# FASCICULE DE BREVET EUROPEEN

(11) **EP 2 724 054 B1**
(45) Date de publication et mention de la délivrance du brevet: **10.02.2016**
(21) Numéro de dépôt: 12731582.8
(22) Date de dépôt: 18.06.2012
(51) Int. Cl.: F16H 61/24, F16H 61/36, F16H 63/30

(54) **DISPOSITIF D'ACTIONNEMENT D'UNE BOÎTE DE VITESSES AVEC MASSE D'INERTIE CLIPSÉE**
VORRICHTUNG ZUR BEDIENUNG EINES SCHALTGETRIEBES MIT AUFGEKLEMMTER TRÄGER MASSE
DEVICE FOR ACTUATING A GEARBOX WITH CLIP-ON INERTIAL MASS

(30) Priorité: 23.06.2011 FR 1155583
(43) Date de publication de la demande: 30.04.2014
(73) Titulaire: Renault S.A.S., 92100 Boulogne-Billancourt (FR)
(72) Inventeur: DECAEN, Damien, F-78370 Plaisir (FR); RAOUL, Michel, F-78990 Elancourt (FR); TEIXEIRA, Jean-Michel, F-92500 Rueil-malmaison (FR)
(86) Numéro de dépôt international: PCT/FR2012/051362
(87) Numéro de publication internationale: WO 2012/175851

(56) Documents cités:
- EP-A1- 1 081 418
- EP-A2- 0 828 097
- DE-A1-102005 059 702

## Description

L'invention se rapporte aux dispositifs d'actionnement pour boîtes de vitesses, notamment pour boîtes de vitesses manuelles, et plus précisément aux dispositifs de filtrage inertiels intégrés au mécanisme de changement de rapport de ces boîtes de vitesses.

Une des critiques parfois exprimées à l'égard des boîtes de vitesses manuelles vient du fait que la commande semble « accrocher » lors des changements de rapport.

Cette sensation est liée au fait que le conducteur agit sur des mécanismes internes de la boîte de vitesses par l'intermédiaire du levier de vitesses, et ressent en retour, au travers du levier de vitesses, certains efforts, accélérations et chocs des pièces internes de la boîte, qui se produisent pendant le changement de rapport.

Les commandes de vitesses à câble accentuent encore ce phénomène par rapport aux commandes de vitesses à barre rigide. Certains des « chocs » perçus sont par exemple liés à une phase intermédiaire entre la synchronisation d'un baladeur et d'un pignon, et le crabotage de ce baladeur et de pignon.

Il est possible de limiter l'amplitude des chocs rotatifs perçus, en augmentant l'inertie de l'axe qui commande la fourchette déplaçant les baladeurs.

Pour ce faire, on peut disposer une masse additionnelle, éventuellement déportée par un bras de levier, solidaire de l'axe de commande. Une telle masse attachée à l'axe de commande lui-même suspendu sur des ressorts de rappel, est susceptible de créer un système capable d'entrer en résonance lors de vibrations du véhicule, de créer du bruit et des sensations de vibrations désagréables au niveau du levier de vitesses.

Pour ne pas tomber sur ces modes propres de vibration du système tout en obtenant un effet de lissage des pics d'effort avec une masse additionnelle moindre, la demande de brevet DE 195 46 547 propose d'augmenter l'inertie en rotation de l'axe de commande, non pas en attachant une masse avec un bras de levier directement sur cet axe de commande, mais en transmettant à cet axe de commande une inertie en rotation supplémentaire par l'intermédiaire d'une biellette, elle-même reliée à une masse pendulaire dont le point de rotation fixe est solidaire du palier portant l'axe de commande.

Ce dispositif apporte un surcroît d'inertie à l'axe de commande à l'aide d'une masse moindre, par l'effet de démultiplication des différents bras de levier reliés par la biellette, ce qui permet de limiter le surcroît de masse du véhicule.

La masse pendulaire est fixée au palier, lui-même fixé à un carter de la boîte.

Cependant, pour des raisons d'encombrement, elle doit parfois être assemblée au palier quand celui-ci est lui-même déjà assemblé sur le carter. Cet assemblage se fait dans des conditions d'accessibilité réduite pour l'opérateur et sans que celui-ci puisse voir la zone sur laquelle il assemble la masse.

Cette masse étant fixée au moyen d'une vis traversant un alésage de la masse et un alésage du palier, son assemblage est malaisé car il faut placer en regard l'un de l'autre les deux alésages, positionner la vis, positionner l'outil de vissage et cela en aveugle et dans un espace réduit.

Le document EP-A2-0 828 0979, qui est considéré comme l'état de la technique le plus proche de l'objet de la revendication 1, divulgue les caractéristiques du préambule de la revendication 1.

L'invention a pour but de proposer un dispositif de commande de changement de vitesses utilisant le principe de la masse pendulaire déportée par rapport à l'axe de commande, qui soit plus simple à assembler que les dispositifs existants, et qui soit également plus simple à désassembler en cas d'intervention sur le véhicule en après-vente.

A cette fin, un dispositif de commande de passage des rapports de transmission d'une boîte de vitesses, notamment d'une boîte de vitesses à commande manuelle, comporte un palier dans lequel peut coulisser et tourner un axe de commande, un levier de sélection apte à faire coulisser l'axe par rapport au palier, un levier de passage apte à faire tourner l'axe autour de son axe géométrique, et une masse d'inertie articulée en rotation par rapport à une liaison pivot appartenant au palier et sensiblement parallèle à l'axe de commande. La masse est reliée au levier de passage par une biellette. La liaison pivot comprend une broche de la masse insérée dans un alésage du palier ou comprend une broche du palier insérée dans un alésage de la masse, et la masse est retenue axialement par rapport à l'axe de la liaison pivot, par au moins un ergot de maintien ménagé sur le palier, déformable élastiquement. Par broche de la masse/respectivement broche du palier, on entend une broche solidaire de la masse/respectivement du palier, en translation comme en rotation. Par ergot déformable élastiquement, on entend une excroissance de matière qui peut s'escamoter par déformation élastique soit de lui-même, soit d'une portion de matière le portant, de manière à pouvoir placer la masse dans son logement ou autour de son axe pivot, ou à pouvoir l'en retirer. Avantageusement, la masse est retenue axialement par une face d'appui du palier dans une première direction, et par un ou plusieurs ergots de maintien dans la direction opposée. Selon un mode de réalisation préféré, un seul ergot de maintien est utilisé. De manière préférentielle, la masse est une pièce métallique et la broche est monobloc avec la masse.

Avantageusement, l'ergot de maintien se trouve dans le prolongement d'une languette de matière, sensiblement parallèle à l'axe de commande. Par languette on entend un élément de type lamelle qui peut être une partie intégrante du palier, monobloc avec le palier, ou un élément rapporté en matière adéquate. La languette est de forme adaptée pour assurer une raideur modérée et un course de déflexion importante perpendiculairement à la lamelle, de manière à faciliter un clipsage manuel de la masse par un déplacement axial de celle-ci, et pour assurer une bonne raideur et une déformation modérée lors d'efforts appliqués sensiblement parallèlement à la languette, de manière à retenir la masse dans l'alésage du palier une fois la masse clipsée en position de fonctionnement.

Selon un mode de réalisation préféré, le palier comporte une portion de base sensiblement perpendiculaire à l'axe de commande et traversée par l'axe de commande, ainsi qu'une portion de support de sélection, apte à porter un axe de pivotement, perpendiculaire à l'axe de commande, du levier de sélection, et la languette du palier est ménagée ou assemblée sur une face de la portion de support de sélection.

Selon un mode de mise en oeuvre avantageux, la portion de support de sélection comporte une face de clipsage sensiblement plane, entaillée suivant deux fentes parallèles de manière définir la languette de l'ergot entre les deux fentes.

Dans ce mode de réalisation, la face de clipsage peut être une face traversée par un alésage configuré pour supporter l'axe de pivotement du levier de sélection.

Dans ce mode de réalisation la zone d'attache par laquelle la languette est reliée à la portion de support de sélection, se trouve de préférence du côté opposé à la portion de base d'appui de la masse une fois assemblée par rapport à l'ergot. La languette est alors sollicitée en compression lorsque la masse tend à sortir de son alésage de guidage.

Avantageusement, la languette comporte à son extrémité un ergot de rétention sous forme d'un dièdre rentrant, une première face du dièdre étant configurée pour faire face à une portion radiale plane de la masse, perpendiculaire à l'axe de commande, et une seconde face du dièdre étant configurée pour faire face à une portion axiale de surface cylindrique de la masse, centrée sur l'axe du pivot de la masse. Cette configuration permet de limiter l'amplitude de la déflexion angulaire de la languette quand elle est sollicitée par la masse pour sortir de son logement.

Selon un autre mode de réalisation possible, le palier comporte une portion de base sensiblement perpendiculaire à l'axe de commande et traversée par l'axe de commande, et la languette est constituée par une excroissance de la portion de base ou par une pièce traversant au moins en partie la portion de base, cette excroissance étant configurée pour retenir la masse comme un crochet de rétention. La languette est sollicitée en traction lorsque la masse tend à sortir de l'alésage.

Selon un mode de mise en oeuvre préféré, le palier et la languette sont monoblocs et injectés en matière synthétique, et de préférence en matière polymère thermoplastique.

Avantageusement, la masse est une pièce métallique, la broche est intégrée à la masse, le palier est une pièce injectée en matière polymère synthétique, et la zone de l'alésage du palier est un anneau d'une autre matière intégré par surmoulage de la matière du palier sur l'anneau. La matière de l'anneau étant en effet alors de préférence un polymère technique à haute résistance à l'abrasion, les conditions d'injection de cet anneau peuvent être mieux optimisées s'il est d'abord injecté indépendamment du palier. La matière de l'anneau peut également être métallique ou à dominante métallique, par exemple un anneau de frottement à armature métallique avec une ou plusieurs couches de revêtement intérieur adapté pour limiter le frottement et/ou pour résister à l'usure.

La biellette joignant la masse et le levier de passage peut être également en matière plastique, et comporter à ses extrémités deux logements déformables aptes à être insérés respectivement sur une rotule de fixation du levier de passage et sur une rotule de fixation de la masse.

On ne s'éloigne pas du cadre de l'invention si le dispositif comporte plusieurs languettes élastiques et plusieurs ergots de maintien.

D'autres buts, caractéristiques et avantages de l'invention apparaîtront à la lecture de la description suivante, donnée uniquement à titre d'exemple nullement limitatif, et faite en référence aux dessins annexés sur lesquels :
- la figure 1 illustre un dispositif de commande de passage de vitesses selon l'invention ;
- la figure 2 illustre un détail de réalisation du dispositif de commande de la figure 1, et
- la figure 3 illustre le détail de réalisation de la figure 2 pendant une sollicitation mécanique du dispositif.

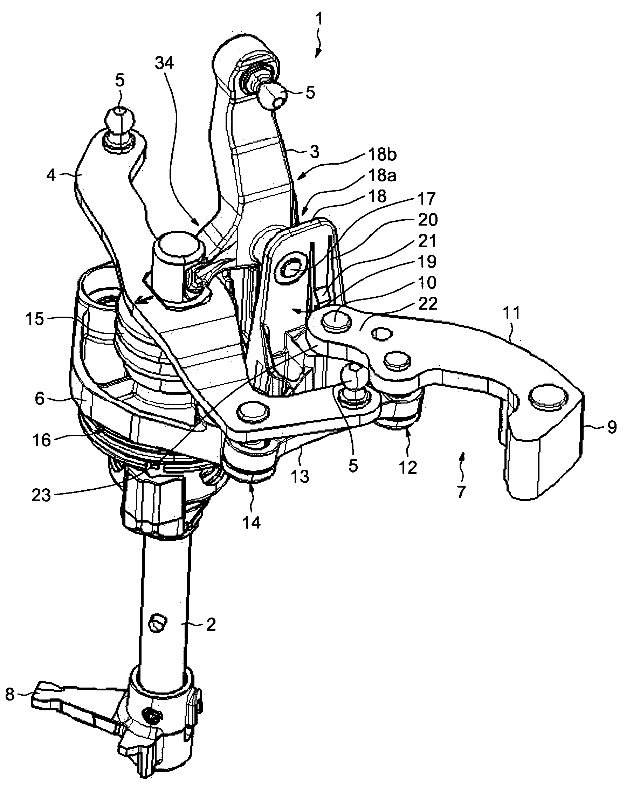

Tel qu'illustré sur la figure 1, un dispositif de commande de passage de vitesses 1 comprend un axe de commande 2 portant un doigt d'actionnement 8 apte à agir sur des baladeurs de la boîte de vitesses (non représentés). Le dispositif de commande 1 comprend également un palier 6, un levier de passage 4, un levier de sélection 3, et une masse pendulaire 7.

L'axe de commande 2 est apte à coulisser au travers d'un palier 6 auquel la partie de l'axe 2 au dessus du palier 6 et extérieure à la boîte est protégée par un soufflet 15. Le levier de passage 4 est solidaire en rotation de l'axe de commande 2, et est disposé transversalement à cet axe de commande 2. A chacune de ses extrémités, le levier de passage 4 est muni de rotules 5 permettant de fixer un câble ou une tige de commande qui peut ainsi imprimer un mouvement de rotation à l'axe de commande 2.

Le câble ou la tige de commande (non représentés) peut être fixé à l'une ou l'autre des rotules 5, à l'une ou l'autre extrémité du levier 4, suivant le modèle de boîte de vitesses auquel le dispositif de commande 1 est intégré.

Le palier 6 comprend une portion de base 16 traversée par l'alésage supportant l'axe de commande 2, et comprend également une portion de support de sélection 18 sensiblement perpendiculaire à la portion de base 16.La portion de support de sélection 18 comprend des flasques 18a et 18b portant un axe 17 autour duquel peut tourner le levier de sélection 3, dont une extrémité 34 est insérée dans une encoche de l'axe de commande 2, de manière à ce qu'une rotation du levier de sélection 3 autour de son axe 17 entraîne un déplacement axial de l'axe de commande 2.

Un autre bras du levier de sélection 3 est muni d'une rotule d'actionnement 5 permettant de faire tourner le levier de sélection autour de l'axe 17, soit au moyen d'un câble, soit par au moyen d'une tige (non représentés).

La masse pendulaire 7 comprend une masselotte 9 disposée à l'extrémité d'un bras de soutien 11. L'extrémité opposée à la masselotte du bras de soutien 11 est reliée par une liaison pivot 10 avec la portion de base 16 du palier 6. La liaison pivot 10 est d'axe sensiblement parallèle à l'axe géométrique de l'axe de commande 2.

Sur le bras de soutien 11, entre la liaison pivot 10 et la masselotte 9, est également disposée une rotule 12 permettant de lier la masse pendulaire 7 en rotation avec le levier de passage 4 par l'intermédiaire d'une biellette 13.

Le levier de passage 4 est également muni d'une rotule d'attache 14. Les rotules 12, 14 sont fixées respectivement sur la masse 7 et sur le levier de passage 4, de manière à ce que leur axe géométrique soit sensiblement parallèle à celui de l'axe de commande 2, et de manière à ce que la biellette 13, réalisée par exemple en matière plastique avec des extrémités déformables aptes à venir coiffer les deux rotules 12 et 14, puisse venir se clipser simultanément sur les deux rotules.

L'axe de commande 2 voit ainsi son inertie augmenter de l'inertie en rotation de la masse 7 et garde un certain de degré de liberté de débattement axial par rapport au palier 6 et la masse 7, grâce aux deux liaisons rotules 12 et 14.

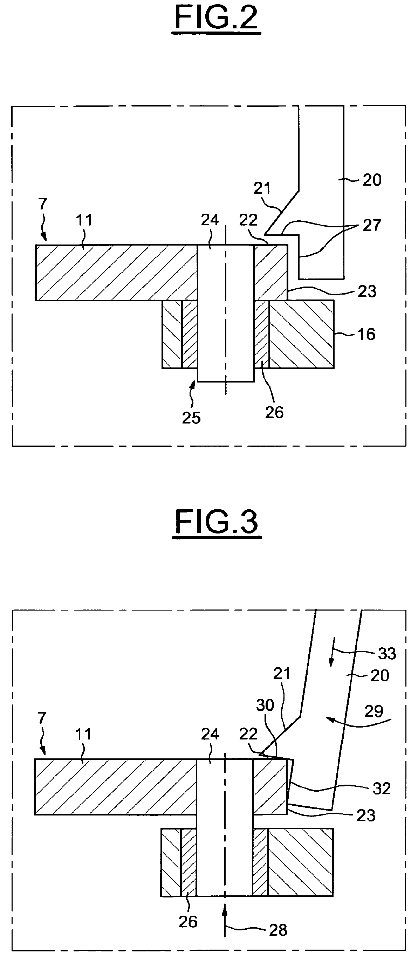

La liaison pivot 10 reliant la masse 7 et le palier 6 peut être obtenue en insérant une broche 24 (non visible sur la figure 1, mais visible sur la figure 2) de la masse 7 dans un alésage 25 (non visible sur la figure 1 mais visible sur la figure 2) du palier 6.

La broche 24 est solidaire en rotation et en translation de la masse 7. Elle peut par exemple être obtenue en frettant ou en sertissant un axe en acier dans le bras de soutien 11 de la masselotte 9. Ce bras de soutien peut être une portion de la masse 7 réalisée par exemple de fonderie. On ne s'éloigne pas du cadre de l'invention si la broche 24 est solidaire en translation mais libre en rotation par rapport au bras de soutien 11, mais une telle variante de l'invention est plus onéreuse à réaliser.

La masse 7 est maintenue axialement de manière à ce que la broche 24 reste dans l'alésage 25, au moyen d'un ergot 21 du palier 6 venant en appui sur une portion de surface radiale 22 de la masse 7. L'ergot 21 est déplaçable élastiquement car il se trouve à l'extrémité d'une languette de matière 20 du palier 6, languette découpée dans la portion de support de sélection 18 du palier 6.

Le palier 6 peut par exemple être réalisé par injection de matière plastique. La languette 20 peut alors être réalisée de moulage en intégrant au moule des broches permettant de définir les bords latéraux de la languette. L'élasticité de la matière plastique peut alors permettre d'assurer la fonction de ressort de la languette 20.

Grâce à cette configuration, l'assemblage de la masse 7 sur le palier 6 se fait simplement en amenant la masse 7 de manière à positionner la broche 24 face à l'alésage 25 du palier, puis en insérant la masse 7 en exerçant une pression suffisante pour écarter radialement l'ergot 21 jusqu'à ce que la masse 7 vienne en appui contre le palier 6. L'ergot 21 revient ensuite par retour élastique assurer le blocage axial de la masse 7.

On peut typiquement choisir de dimensionner la languette 20 et l'ergot 21 de manière à assurer que la force nécessaire pour la mise en place manuelle de la masse 7 soit raisonnable, par exemple soit inférieure à 70 N et de préférence soit inférieure à 50 N.

Afin de maintenir la masse en place quelles que soient les sollicitations, notamment liées aux vibrations du véhicule qui tendraient à faire sortir la masse de son logement, on peut par exemple prévoir de dimensionner la languette 20 et l'ergot 21 de manière à ce que la masse 7 ne puisse franchir l'ergot 21 qu'en exerçant une force supérieure à 300 N, et de préférence une force supérieure à 800 N, voire à 1000 N.

On ne s'éloigne pas du cadre de l'invention si une broche fixe est intégrée au palier 6, le palier 6 comprenant un ergot élastique permettant de venir bloquer axialement la masse 7 quand on vient placer un alésage de la masse sur la broche fixe du palier.

Il peut cependant être plus avantageux d'intégrer la broche à la masse 7 qui est en général une pièce métallique de dimensions plus réduites et de forme plus simple que le palier 6, que de l'intégrer au palier 6 qui est de plus en plus souvent réalisé en matière plastique, et dont la forme plus complexe rend l'opération d'intégration de la broche plus difficilement automatisable.

De manière préférentielle, lorsque l'on définit le positionnement de la liaison pivot 10, dans la mesure où les autres contraintes mécaniques et géométriques imposées au système le permettent, on positionne cette liaison pivot suffisamment près de la portion de support de sélection 18 pour que la languette 20 et l'ergot 21 de maintien élastique puissent être intégrés à la portion de support de sélection. On peut ainsi bénéficier d'une longueur de languette assurant l'élasticité nécessaire sans utiliser un surcroît de matière par rapport à un palier 6 réalisé sans ergot de clipsage. Dans ce cas de figure avantageux, on évite également d'utiliser un surcroît de matière pour réaliser la masse, et l'on évite d'avoir à élargir la portion radiale de la masse au-delà de la largeur, dans le même plan radial, du bras de soutien 11.

Si les contraintes mécaniques ou géométriques ne permettent pas d'intégrer l'ergot à la portion de support de sélection en conservant la forme globale de celui-ci, on peut par exemple envisager de munir la portion de support de sélection 18 de nervures sensiblement parallèles à l'axe de levier de sélection 17, et permettant soit de déporter une partie de la face de clipsage 19 vers la liaison pivot 10, soit de servir de support à une ou plusieurs languettes 20 se terminant par un ou plusieurs ergots 21.

On ne s'éloigne pas du cadre de l'invention si la languette 20 est une languette en acier à ressort rapportée sur la portion de support de sélection 18, par exemple insérée dans une fente prévue à cet effet sur le support de sélection 18.

Ce mode de réalisation peut être avantageux si le matériau choisi pour réaliser le palier 6 ne présente pas l'élasticité requise pour assurer la souplesse requise pour la languette 20, par exemple si le palier 6 est réalisé par moulage d'un alliage de métaux ou par injection d'une matière plastique trop rigide.

On ne s'éloigne pas non plus du cadre de l'invention si l'ergot 21 n'est pas intégré à la portion 18 de support de sélection, par exemple si l'ergot 21 est porté par une excroissance de la portion de base 16 du palier 6, par exemple sous forme d'un harpon moulé dépassant de la portion de base 16. Si la proximité n'est pas suffisante entre la liaison pivot 10 et la portion de support de sélection 18, on peut également retenir axialement la masse 7 au moyen d'une pièce élastique rapportée (non représentée), par exemple en acier, qui traverse totalement ou partiellement la portion de base 16 et retient axialement la masse 7 en agissant comme un crochet.

Bien que l'on ait décrit des éléments élastiques sous forme de languettes 20 permettant de retenir l'ergot 21 et de permettre son déplacement avec un rappel élastique, il est bien entendu que d'autres géométries déformables aussi bien en matière plastique qu'en acier peuvent être envisagées, par exemple des portions de fil à ressort pliées de manière à offrir à une extrémité une zone de prise résistante à la rotation, et de manière à définir à l'autre extrémité un ergot apte à supporter un effort de flexion.

La figure 2 illustre un détail du dispositif de clipsage de la figure 1 permettant de retenir la masse 7. On retrouve sur la figure 2 des éléments communs à la figure 1, les mêmes éléments étant désignés par les mêmes références. On retrouve en particulier la languette de maintien élastique 20 se terminant par un ergot 21 apte à venir en appui sur une portion radiale 22 de la masse 7 entourant la broche 24. L'ergot 21 comprend un dièdre d'appui rentrant 27 apte à venir en appui non seulement sur la portion radiale 22 de la masse 7, mais également sur une portion axiale 23 cylindrique entourant la broche 24.

L'alésage 25 du palier 6 ménagé dans la portion de base 16 de ce palier 6, est ici renforcé par un anneau de frottement 26 qui peut être réalisé dans un matériau différent de celui utilisé pour le reste du palier 6. On peut par exemple surmouler cet anneau de frottement 26, en l'insérant dans le moule, au moment de l'injection du palier 6. L'anneau de frottement 26 peut être par exemple métallique ou peut être réalisé dans une matière plastique mieux adaptée au frottement que la matière plastique constituant le reste du palier 6.

La figure 3 illustre le détail de clipsage de la figure 2 quand celui-ci est sollicité par des contraintes mécaniques tendant à faire s'échapper la masse 7 de son logement 25. Sur cette figure 3, la masse 7 est soumise à une force verticale 28 qui vient mettre en appui la surface radiale 22 entre une portion radiale 30 du dièdre 27 de l'ergot 21. Sous l'effet de cette force verticale 28, une surface axiale 32 du dièdre 27 de l'ergot 21 vient en appui contre la surface axiale 23 de la masse 7. De cette manière, la déflexion 29 de la languette 20 est limitée, et la direction 33 de l'effort de compression de la languette reste relativement colinéaire à l'effort 28 que cet effort de compression doit compenser.

On évite ainsi un effet de flambement de la languette qui peut, de cette manière, résister à des efforts de compression relativement élevés.

L'invention ne se limite pas aux exemples de réalisation décrits et peut se décliner en de nombreuses variantes, notamment en ce qui concerne le type d'élément élastique formant l'ergot utilisé, et la manière dont cet élément élastique est intégré au palier ou y est fixé.

La surface radiale 22 entourant la broche 24 de la masse 7 peut éventuellement être adaptée en diamètre ou en relief. On peut par exemple envisager de définir une surface radiale de diamètre supérieur au diamètre, dans ce même plan radial du bras de soutien 11. La surface ainsi disponible autour de la broche 24 peut permettre d'utiliser un ergot 21 intégré à la portion de support de sélection 18 sans élargir cette portion de support de sélection.

La périphérie de la portion de surface radiale 22 peut éventuellement être munie d'un relief de type rainure, afin d'améliorer l'accrochage d'ergots 21.

Le dispositif de commande de passage de vitesses selon l'invention permet à la fois d'assurer un bon confort de conduite grâce au filtrage inertiel et de limiter les coûts de production, notamment les coûts liés aux opérations d'assemblage et les coûts de maintenance du véhicule.

## Revendications

1. Dispositif (1) de commande de passage des rapports de transmission d'une boîte de vitesses, comportant un palier (6) dans lequel peut coulisser et tourner un axe de commande (2), un levier de sélection (3) apte à faire coulisser l'axe (2) par rapport au palier (6), un levier de passage (4) apte à faire tourner l'axe (2) autour de son axe géométrique, et une masse d'inertie (7) articulée en rotation par rapport à une liaison pivot (10) appartenant au palier (6) et sensiblement parallèle à l'axe de commande (2), la masse (7) étant reliée au levier de passage (4) par une biellette (13), **caractérisé en ce que** la liaison pivot (10) comprend une broche (24) de la masse (7) insérée dans un alésage (25) du palier (6) ou comprend une broche du palier (6) insérée dans un alésage de la masse (7), et **en ce que** la masse (7) est retenue axialement par rapport à l'axe de la liaison pivot (10), par au moins un ergot (21) de maintien ménagé sur le palier (6), déformable élastiquement.

2. Dispositif selon la revendication 1, dans lequel l'ergot de maintien (21) se trouve dans le prolongement d'une languette de matière (20), sensiblement parallèle à l'axe de commande (2).

3. Dispositif selon l'une des revendications précédentes, dans lequel le palier (6) comporte une portion de base (16) sensiblement perpendiculaire à l'axe de commande (2) et traversée par l'axe de commande, ainsi qu'une portion de support de sélection (18), apte à porter un axe de pivotement (17), perpendiculaire à l'axe de commande (2), du levier de sélection, et dans lequel dispositif la languette (20) du palier est ménagée ou assemblée sur une face (19) de la portion de support de sélection (18).

4. Dispositif selon la revendication 3, dans lequel la portion de support de sélection (18) comporte une face de clipsage (19) sensiblement plane, entaillée suivant deux fentes parallèles de manière définir la languette (20) de l'ergot (21) entre les deux fentes.

5. Dispositif selon la revendication 4, dans lequel la face de clipsage (19) est traversée par un alésage configuré pour supporter l'axe de pivotement (17) du levier de sélection (3).

6. Dispositif selon l'une des revendications 4 à 5, dans lequel la zone d'attache par laquelle la languette (20) est reliée à la portion de support de sélection (18), se trouve du côté opposé à la portion de base (16) d'appui de la masse (7) une fois assemblée par rapport à l'ergot (21).

7. Dispositif selon la revendication 6, dans lequel la languette (20) comporte à son extrémité un ergot de rétention sous forme d'un dièdre rentrant (27), une première face (30) du dièdre étant configurée pour faire face à une portion radiale plane de la masse, perpendiculaire à l'axe de commande (2), et une seconde face (32) du dièdre étant configurée pour faire face à une portion axiale de surface cylindrique de la masse (7), centrée sur l'axe du pivot (10) de la masse.

8. Dispositif selon la revendication 2, dans lequel le palier (6) comporte une portion de base (16) sensiblement perpendiculaire à l'axe de commande (2) et traversée par l'axe de commande, et la languette (20) est constituée par une excroissance de la portion de base (16) ou par une pièce traversant au moins en partie la portion de base, ladite pièce ou ladite excroissance étant configurée pour retenir la masse (17) comme un crochet de rétention.

9. Dispositif selon l'une des revendications précédentes, dans lequel le palier (6) et la languette (20) sont monoblocs et injectés en matière synthétique.

10. Dispositif selon l'une des revendications précédentes, dans lequel la masse (7) est une pièce métallique, la broche (24) est intégrée à la masse, le palier (6) est une pièce injectée en matière polymère synthétique, et la zone de l'alésage du palier (10) est un anneau d'une autre matière intégré par surmoulage de la matière du palier sur l'anneau.

## Patentansprüche

1. Vorrichtung (1) zur Getriebesteuerung eines Schaltgetriebes, umfassend ein Lager (6), in dem eine Steuerachse (2) verschiebbar und drehbar gelagert ist, einen Steuerhebel (3), der geeignet ist, die Achse (2) relativ zu dem Lager (6) zu verschieben, einen Schalthebel (4), der geeignet ist, die Achse (2) um ihre geometrische Achse drehen zu lassen, und eine Trägheitsmasse (7), die gegenüber einer Schwenkverbindung (10), die zu dem Lager (6) gehört, und im Wesentlichen parallel zur Steuerachse (2) drehbar gelagert ist, wobei die Masse (7) mit dem Schalthebel (4) durch einen Arm (13) verbunden ist, **dadurch gekennzeichnet, dass** die Schwenkverbindung (10) einen Stift (24) der Masse (7) aufweist, der in einer Bohrung (25) des Lagers (6) eingefügt ist, oder einen Stift des Lagers (6) aufweist, der in einer Bohrung der Masse (7) eingefügt ist, und dass die Masse (7) axial gegenüber der Achse der Schwenkverbindung (10) durch mindestens einen Haltesporn (21), der auf dem Lager (6) angebracht ist, der elastisch verformbar ist, gehalten ist.

2. Vorrichtung nach Anspruch 1, wobei sich der Haltesporn (21) in der Verlängerung einer Materialzunge (20) im Wesentlichen parallel zur Steuerachse (2) befindet.

3. Vorrichtung nach einem der vorhergehenden Ansprüche, wobei das Lager (6) einen Basisabschnitt (16), der im Wesentlichen senkrecht zur Steuerachse (2) ist und von der Steuerachse durchquert wird, und einen Auswahlträgerabschnitt (18) aufweist, der geeignet ist, eine Schwenkachse (17) des Steuerhebels zu tragen, die senkrecht zur Steuerachse (2) ist, und wobei bei der Vorrichtung die Zunge (20) des Lagers auf einer Seite (19) des Auswahlträgerabschnitts (18) montiert oder angeordnet ist.

4. Vorrichtung nach Anspruch 3, wobei der Auswahlträgerabschnitt (18) eine im Wesentlichen ebene Seite zum Einrasten (19) aufweist, die entlang zwei parallelen Schlitzen eingeschnitten ist, um die Zunge (20) des Sporns (21) zwischen den zwei Schlitzen zu definieren.

5. Vorrichtung nach Anspruch 4, wobei die Seite zum Einrasten (19) durch eine Bohrung durchquert wird, die gebildet ist, um die Schwenkachse (17) des Steuerhebels (3) zu tragen.

6. Vorrichtung nach einem der Ansprüche 4 bis 5, wobei sich der Befestigungsbereich, durch den die Zunge (20) mit dem Auswahlträgerabschnitt (18) verbunden ist, auf der gegenüberliegenden Seite von dem Basisabschnitt (16) zur Auflage der Masse (7) befindet, sobald er gegenüber dem Sporn (21) angeordnet ist.

7. Vorrichtung nach Anspruch 6, wobei die Zunge (20) an ihrem Ende einen Haltesporn in Form eines zurückgezogenen Dieders (27) aufweist, wobei eine erste Fläche (30) des Dieders konfiguriert ist, um einem ebenen, radialen Abschnitt der Masse gegenüberzuliegen, der senkrecht zur Steuerachse (2) ist, und eine zweite Fläche (32) des Dieders konfiguriert ist, um einem axialen Abschnitt mit zylindrischer Fläche der Masse (7) gegenüberzuliegen, der auf der Schwenkachse (10) der Masse zentriert ist.

8. Vorrichtung nach Anspruch 2, wobei das Lager (6) einen Basisabschnitt (16) aufweist, der im Wesentlichen senkrecht zur Steuerachse (2) ist und von der Steuerachse durchquert wird, und die Zunge (20) durch einen Vorsprung des Basisabschnitts (16) oder durch ein Stück gebildet ist, das mindestens teilweise den Basisabschnitt durchquert, wobei das Stück oder der Vorsprung konfiguriert sind, um die Masse (17) wie einen Haltehaken zu halten.

9. Vorrichtung nach einem der vorhergehenden Ansprüche, wobei das Lager (6) und die Zunge (20) aus einem Stück sind und aus Kunststoff gespritzt sind.

10. Vorrichtung nach einem der vorhergehenden Ansprüche, wobei die Masse (7) ein Metallteil ist, der Stift (24) in der Masse integriert ist, das Lager (6) ein Teil ist, das aus synthetischem Polymermaterial gespritzt ist, und der Bereich der Bohrung des Lagers (10) ein Ring aus einem anderen Material ist, der durch Überformen des Materials des Lagers auf dem Ring integriert ist.

## Claims

1. Device (1) for controlling gear shifts in a gearbox, comprising a bearing (6) in which a control rod (2) can slide and turn, a selector lever (3) able to cause the rod (2) to slide in relation to the bearing (6), a gear shift lever (4) able to cause the rod (2) to turn about its geometric axis, and an inertial mass (7) articulated in rotation in relation to a pivot connection (10) which is associated with the bearing (6) and substantially parallel to the control rod (2), the mass (7) being connected with the gear shift lever (4) via a link rod (13), **characterized in that** the pivot connection (10) comprises a pin (24) of the mass (7) inserted in a bore (25) of the bearing (6) or comprises a pin of the bearing (6) inserted in a bore of the mass (7), and **in that** the mass (7) is retained axially in relation to the axis of the pivot connection (10) by at least one elastically deformable retaining lug (21) formed on the bearing (6).

2. Device according to Claim 1, in which the retaining lug (21) lies in the extension of a material tongue (20) which is substantially parallel to the control rod (2).

3. Device according to either of the preceding claims, in which the bearing (6) comprises a base portion (16) which is substantially perpendicular to the control rod (2) and through which the control rod passes, and a selection support portion (18) able to carry a pivot rod (17), perpendicular to the control rod (2), of the selector lever, and in which device the tongue (20) of the bearing is arranged or assembled on a face (19) of the selection support portion (18).

4. Device according to Claim 3, in which the selection support portion (18) comprises a clip face (19) which is substantially flat and notched with two parallel slots so as to define the tongue (20) of the lug (21) between the two slots.

5. Device according to Claim 4, in which the clip face (19) has a throughbore which is configured to support the pivot rod (17) of the selector lever (3).

6. Device according to either of Claims 4 and 5, in which the fixing zone via which the tongue (20) is connected with the selection support portion (18) lies on the opposite side to the base portion (16) for supporting the mass (7) once assembled in relation to the lug (21).

7. Device according to Claim 6, in which the tongue (20) comprises at its end a retaining lug in the form of an inward dihedral (27), a first face (30) of the dihedral being configured to face a flat radial portion of the mass which is perpendicular to the control rod (2), and a second face (32) of the dihedral being configured to face an axial portion of the cylindrical surface of the mass (7) which is centered on the pivot axis (10) of the mass.

8. Device according to Claim 2, in which the bearing (6) comprises a base portion (16) which is substantially perpendicular to the control rod (2) and through which the control rod passes, and the tongue (20) is made up of a protrusion of the base portion (16) or a part passing at least partly through the base portion, said part or said protrusion being configured to retain the mass (17) as a retaining hook.

9. Device according to any of the preceding claims, in which the bearing (6) and the tongue (20) are integral and injection-molded from synthetic material.

10. Device according to one of the preceding claims, in which the mass (7) is a metal part, the pin (24) is integral with the mass, the bearing (6) is an injection-molding of synthetic polymer material, and the bore zone of the bearing (10) is a ring of another material integrated by molding the material of the bearing over the ring.
